# EUROPÄISCHE PATENTSCHRIFT

(11) **EP 2 880 313 B1**
(45) Veröffentlichungstag und Bekanntmachung des Hinweises auf die Patenterteilung: **30.06.2021**
(21) Anmeldenummer: 13747969.7
(22) Anmeldetag: 31.07.2013
(51) Int. Cl.: F04B 3/00, F04B 15/00, F04C 2/107, F04C 11/00, F04C 2/16, F04C 13/00, B01D 21/00, B01D 24/00, B01D 21/34, B01D 21/24

(54) **VERFAHREN ZUM BETREIBEN EINER MULTIPHASENPUMPE**
METHOD FOR OPERATING A MULTI-PHASE PUMP
PROCÉDÉ PERMETTANT DE FAIRE FONCTIONNER UNE POMPE À PHASES MULTIPLES

(30) Priorität: 31.07.2012 DE 102012015064
(43) Veröffentlichungstag der Anmeldung: 10.06.2015
(73) Patentinhaber: ITT Bornemann GmbH, 31683 Obernkirchen (DE)
(72) Erfinder: ROHLFING, Gerhard, 32479 Hille (DE); BRANDT, Jens-Uwe, 31737 Rinteln (DE)
(74) Vertreter: Stornebel, Kai
(86) Internationale Anmeldenummer: PCT/EP2013/002260
(87) Internationale Veröffentlichungsnummer: WO 2014/019687

(56) Entgegenhaltungen:
- DE-A1-102010 019 238
- GB-A- 2 405 906
- GB-A- 2 405 906
- US-A1- 2011 103 987
- US-A1- 2011 103 987
- US-A1- 2012 048 113
- US-A1- 2012 048 113

## Beschreibung

Die Erfindung betrifft ein Verfahren zum Betreiben einer Multiphasenpumpe, die einen saugseitigen Einlass und einen druckseitigen Auslass aufweist und mit der ein mit Feststoffen beladenes Multiphasengemisch verpumpt wird.

Insbesondere bei der Förderung von Kohlenwasserstoffen, also bei der Förderung von Erdöl und Erdgas, werden Stoffgemische gefördert, die eine sehr unregelmäßige Zusammensetzung aufweisen. Es können Förderabschnitte mit reinem Gasanteil sowie Förderabschnitte mit einem 100%igen Flüssigkeitsanteil abwechseln. Eine Vorhersage über die Dauer einzelner Förderphasen oder Zusammensetzungen des Multiphasengemisches sind nicht möglich. Grundsätzlich besteht die Möglichkeit, vor dem Verpumpen der Multiphasengemische die einzelnen Phasen voneinander zu trennen, also die Gasphase und die Flüssigkeitsphase in einem Separator voneinander zu trennen, so dass nur Gasphase oder Flüssigkeitsphase der jeweiligen Pumpeinrichtung zugeführt wird. Eine solche Vorgehensweise ist mit einem hohen apparativen und logistischen Aufwand verbunden.

Zur Vermeidung eines vorgeschalteten Separators werden sogenannte Multiphasenpumpen eingesetzt, die in der Regel auf Basis einer mehrspindeligen Schraubenspindelpumpe arbeiten.

Aus der WO 94/27049 A1 ist ein Pumpverfahren zum Betreiben einer Multiphasen-Schraubenspindelpumpe und Pumpe mit zumindest einer Förderschraube, die von einem Gehäuse umschlossen ist, bekannt. Das Gehäuse weist zumindest einen Saugstutzen und zumindest einen Druckstutzen auf, wobei das angesaugte Medium in einem pulsationsarmen, kontinuierlichen Förderstrom parallel zu der Schraube fortbewegt und in den Druckstutzen kontinuierlich ausgestoßen wird. Im Druckraum findet eine Separierung der Flüssigkeitsphase von der Gasphase statt. Druckseitig wird ein Teilflüssigkeitsvolumen der separierten Flüssigkeitsphase dosiert in den Ansaugbereich zurückgeführt und so in Umlauf gehalten, um eine Abdichtung und Kühlung bereitzustellen. Zur Separation wird die Strömungsgeschwindigkeit des austretenden Mediums auf der Druckseite verringert. Eine Flüssigkeitskurzschlussleitung ist im Druckraum so tief angeordnet, dass ein permanenter Flüssigkeitsumlauf gewährleistet ist. Der Anschluss der Kurzschlussleitung liegt unterhalb des Fördergehäuses.

Die erhöhte Nachfrage nach Kohlenwasserstoffen hat unter anderem dazu geführt, dass die leicht zu erreichenden und besonders ergiebigen Förderstandorte weitgehend ausgebeutet sind. Es werden daher zunehmend Lagerstätten ausgebeutet, die weniger ergiebig sind oder einen erhöhten Feststoffanteil im Multiphasengemisch aufweisen. Darüber hinaus wird versucht, die bereits erschlossenen Lagerstätten durch sogenanntes Fracking länger auszubeuten oder insgesamt die Gas- und Flüssigkeitsdurchlässigkeit einer Gesteinsschicht durch Rissbildung zu erhöhen. Auch dies führt zu einem erhöhten Feststoffanteil in dem zu verpumpenden Multiphasengemisch.

Die Vorrichtung gemäß dem Stand der Technik hat bei erhöhten Feststoffanteilen das Problem, dass aufgrund der tiefen Anordnung der Rezirkulationsleitung Feststoffe, die im strömungsberuhigten Bereich nach unten sinken, ebenfalls rezirkuliert werden, was zu einem erhöhten Verschleiß der Schraubenspindel und dem Fördergehäuse führt. Darüber hinaus besteht die Gefahr, dass durch Feststoffe die Rezirkulationsleitung verstopft.

Die US 2012/0048113 A1 betrifft ein System und ein Verfahren zum Schmieren von Multiphasenpumpen, bei denen ein Separator an einen Flüssigkeitsauslass einer Pumpe angeschlossen ist. Der Separator kann zur Entfernung eines Teils von Feststoffen eines Multiphasenprozessfluids und zur Verringerung eines Gasgehaltes des Multiphasenprozessfluids ausgebildet sein. Ein Teil des separierten Prozessfluids wird über eine Rückführleitung zu dem Schraubenpumpensystem geleitet, um Komponenten innerhalb des Systems zu schmieren und den Anteil von Festkörpern in dem Prozessfluid zu reduzieren.

Die US 2011/0103987 A1 betrifft ein Pumpensystem mit einer zweigängigen Schraubenspindelpumpe, der ein Separator nachgeschaltet ist.

Die GB 2,405,906 A betrifft eine Flüssigkeitsring-Vakuumpumpe mit einer Sedimentfalle, um Sedimente aus dem Sperrfluid zu entfernen.

Aufgabe der vorliegenden Erfindung ist es, ein Verfahren bereitzustellen, mit denen die Nachteile aus dem Stand der Technik vermieden oder vermindert werden. Erfindungsgemäß wird diese Aufgabe durch ein Verfahren mit den Merkmalen des Hauptanspruches gelöst. Vorteilhafte Ausgestaltungen und Weiterbildungen der Erfindung sind in den Unteransprüchen, der Beschreibung und den Figuren offenbart.

Das erfindungsgemäße Verfahren zum Betreiben einer Multiphasenpumpe, die einen saugseitigen Einlass und einen druckseitigen Auslass aufweist und mit der ein mit Feststoffen beladenes Multiphasengemisch verpumpt wird, sieht vor, dass das Multiphasengemisch in einen druckseitigen Separationsraum verpumpt wird, dass in dem Separationsraum eine Gasphase von einer Flüssigkeitsphase und einer Feststoffphase separiert wird, dass weiterhin in dem Separationsraum die Flüssigkeitsphase von der Feststoffphase separiert wird und dass ein Teil der von der Feststoffphase befreiten Flüssigkeitsphase zu der Saugseite zugeleitet wird, um einerseits eine Spaltabdichtung innerhalb einer Schraubenspindelpumpe zu bewirken und andererseits die Abfuhr der Verdichtungswärme zu erleichtern. Das Zuleiten der Flüssigkeitsphase zu der Saugseite erfolgt durch eine Rezirkulationsleitung oder einen Rezirkulationsbypass, in der zumindest ein Ventil angeordnet ist, das beim Anfahren vollständig geöffnet werden kann. Damit kann ein lastfreies Anfahren der Vorrichtung ermöglicht werden, was beim Anfahren der Anlage zu einem reduzierten Widerstand und zu einer Energieeinsparung führt. Nach dem Anfahren und nach Erreichen eines stabilen Betriebspunktes kann zur Aufnahme des Fördervorganges und der Druckerhöhung des Multiphasengemisches in der Multiphasenpumpe das Ventil geschlossen werden, damit das gewünschte Druckniveau erreicht werden kann. Nach Erreichen des gewünschten Druckniveaus kann der Durchlassquerschnitt des Ventils in der Rezirkulationsleitung in Abhängigkeit von Betriebsparametern eingestellt werden, um die Anlage auf sich verändernde Bedingungen einstellen zu können. So kann beispielsweise eine Vergrößerung des Durchlasses des Ventils bei einer festgestellten Erwärmung der Multiphasenpumpe durchgeführt werden, um die in der Pumpe vorhandene Wärme abführen zu können. Bei einem ausreichenden Flüssigkeitsanteil des zugeführten Multiphasengemisches kann der Querschnitt des Ventils verringert werden, um den Wirkungsgrad der Anlage zu verbessern. Das Separieren der Flüssigkeitsphase von der Feststoffphase hat den Vorteil, dass eine weitestgehend von der Feststoffphase befreite Flüssigkeitsphase zur Rezirkulation, zur Schmierung der Schraubenspindeln sowie zum Abtransport der Kompressionswärme innerhalb der Multiphasenpumpe eingesetzt wird, so dass ein verringerter Verschleiß an den bewegten Komponenten der Multiphasenpumpe auftritt. Die Wärmeabfuhr wird vergleichmäßigt und es wird darüber hinaus verhindert, dass Feststoffpartikel permanent im Umlauf gehalten werden. Die Separation von Feststoffphase und Flüssigkeitsphase kann mehrstufig ausgeführt werden, so dass mehrere Separationsstufen hintereinander vorhanden sind, um sicherzustellen, dass möglichst keine Feststoffpartikel in die Rezirkulationsleitung gelangen und zur Saugseite transportiert werden.

In einer Weiterbildung der Erfindung ist vorgesehen, dass die in dem Separationsraum abgetrennte Feststoffphase aus dem Separationsraum abtransportiert wird. Dies ist insbesondere dann vorteilhaft, wenn die Förderbedingungen und Strömungsbedingungen innerhalb der Separationseinrichtung ein Herausspülen der abgesetzten Feststoffphase nicht ohne Weiteres ermöglichen. Der Separationsraum kann entweder in einem separaten Modul, in einem Pumpengehäuseabschnitt oder im Pumpengehäuse selbst integriert sein.

Die Feststoffphase kann kontinuierlich abtransportiert werden, beispielsweise über die Strömung innerhalb des Separationsraumes oder über eine Zellradschleuse oder einen Zyklonabscheider, wodurch gewährleistet wird, dass die Feststoffphase nicht durch den Auslass für die Flüssigkeitsphase aus dem Separationsraum austritt. Ebenfalls ist es möglich, eine diskontinuierliche Entfernung der Feststoffphase aus dem Separationsraum zu bewirken, beispielsweise über ein Schaltventil, über Flüssigkeitsslugs, die gezielt im Pumpenbetrieb hervorgerufen werden, oder eine Revisionsklappe. Wenn im normalen Betrieb der Multiphasenpumpe die Flüssigkeitsphase mengenmäßig nicht ausreicht, um die Feststoffphase, die sich im Separationsraum abgelagert hat, auszutragen, kann durch das Hervorrufen von Flüssigkeitsslugs, also das schwallartige Zuführen von Flüssigkeitsphase, gezielt in das Pumpenmanagement eingegriffen werden, um ausreichend Flüssigkeitsphase bereitzustellen, damit die abgelagerten Feststoffpartikel ausgetragen werden.

Die Gasphase kann über einen von dem Auslass für die Flüssigkeitsphase getrennten Gasauslass getrennt von der Flüssigkeitsphase aus dem Separationsraum abgeführt werden, so dass sich nach der Druckerhöhung eine getrennte Weiterleitung der geförderten Kohlenwasserstoffe realisieren lässt. Sofern die komprimierte Gasphase nicht zusammen mit der Flüssigkeitsphase und gegebenenfalls der Feststoffphase gemeinsam abtransportiert werden soll, kann nach dem Verpumpen mit der Multiphasenpumpe eine druckseitige Phasentrennung vorgenommen werden, so dass gleichzeitig zu der Druckerhöhung durch die Pumpe eine Separation und Phasentrennung der geförderten Medien vorgenommen wird.

Die Zufuhr der von der Feststoffphase getrennten Flüssigkeitsphase zu der Saugseite kann geregelt vorgenommen werden, beispielsweise in Abhängigkeit von gemessenen Werten über die Zusammensetzung des zu fördernden Multiphasenstroms, um die rezirkulierte Flüssigkeitsmenge dem Bedarf anzupassen. Ebenfalls ist es möglich, die Gasabfuhr von dem Separationsraum geregelt durchzuführen, um den Anteil von Flüssigkeitsphase und gegebenenfalls Feststoffphase in dem Separationsraum und damit auch die Menge der zu rezirkulierenden Flüssigkeitsphase bedarfsgerecht einstellen zu können.

Die Flüssigkeitsphase kann von dem Separationsraum in ein von dem Separationsraum abgetrenntes Reservoir geleitet werden, um aus diesem Reservoir zu der Rezirkulationsleitung und damit zu der Saugseite geleitet zu werden. Durch das Einleiten der separierten Flüssigkeitsphase in ein Reservoir wird eine weitere Vergleichmäßigung der Rezirkulation ermöglicht, da von Feststoffphase befreite Flüssigkeitsphase gesammelt und bevorratet in der Separationseinrichtung vorgehalten werden kann. Schwankungen innerhalb des Förderstromes wirken sich somit nicht unmittelbar auf die Rezirkulation und damit die Schmierung und Abdichtung sowie Wärmeabfuhr der Schraubenspindelpumpe aus.

Die von der Feststoffphase befreite Flüssigkeitsphase kann vor der Rezirkulation noch gefiltert werden, um unerwünschte Partikel fernzuhalten.
Zum Abtransportieren der separierten Feststoffphase kann Flüssigkeitsphase stoßweise der Multiphasenpumpe zugeleitet und in den Separationsraum eingebracht werden. Dieses stoßweise Zuleiten kann sowohl von dem primär geförderten Medium stammen, also auf der Saugseite befindliches Multiphasengemisch, als auch von der separierten, druckseitigen Flüssigkeitsphase abgetrennt und gesammelt werden, so dass bereits aufbereitete, also von Feststoffanteilen befreite Flüssigkeitsphase von der Druckseite stoßweise, beispielsweise aus einem Reservoir, zur Saugseite geleitet wird, um in dem Separationsraum gesammelte Feststoffphase auszutragen. Die Sammlung der Flüssigkeitsphase kann auch einlassseitig geschehen, beispielsweise durch eine geeignete Anordnung von Zuleitungsrohren, die zumindest aufsteigende Abschnitte aufweisen können, so dass durch die Gasphase in niedriger gelegenen Abschnitten Flüssigkeitsphase schwallweise der Multiphasenpumpe zugeführt wird.

Zu einem Austragen der Feststoffphase aus dem Separationsraum können Sensoren eingesetzt werden, die beispielsweise in Abhängigkeit des Füllstandes einen Abtransport veranlassen, alternativ dazu kann eine zeitgesteuerte Entfernung der Feststoffphase aus dem Separationsraum erfolgen. In Abhängigkeit von den Sensorwerten kann ein Flüssigkeitsslug erzeugt oder die Zellradschleuse aktiviert werden, so dass bedarfsgerecht der Feststoffaustrag vorgenommen wird. Ebenso können die anderen Austragsmechanismen sensorgesteuert veranlasst werden.

Eine Vorrichtung zum Verpumpen eines mit Feststoffen beladenen Multiphasengemisches mit einer Multiphasenpumpe, die einen saugseitigen Einlass und einen druckseitigen Auslass aufweist, mit einer druckseitigen Separationseinrichtung, in der eine Flüssigkeitsphase von einer Gasphase getrennt wird, und einer Rezirkulationsleitung, über die separierte Flüssigkeitsphase der Saugseite zugeführt wird, sieht vor, dass in der Separationseinrichtung, in der eine Feststoffphase von der Flüssigkeitsphase getrennt wird, zumindest ein Absetzraum ausgebildet ist, dass der Absetzraum mit dem Auslass verbunden ist und dass ein von dem Absetzraum getrenntes Reservoir für von Feststoffen separierte Flüssigkeitsphase ausgebildet ist, das mit der Rezirkulationsleitung verbunden ist. Da innerhalb der Separationseinrichtung der durch die Multiphasenpumpe erhöhte Druck vorherrscht, kann vor oder in der Rezirkulationsleitung ein Ventil für eine gesteuerte Zuleitung der Flüssigkeitsphase angeordnet sein. Über das Ventil kann der Zeitpunkt und die Menge der rezirkulierenden Flüssigkeitsphase gesteuert werden.

In der Separationseinrichtung ist ein Absetzraum ausgebildet, der insbesondere eine schwerkraftbedingte Trennung von Flüssigkeitsphase und Feststoffphase ermöglicht. Dieser Absetzraum ist in einem strömungsberuhigten Bereich der Separationseinrichtung angeordnet und ermöglicht eine effektive Trennung der Feststoffphase von der Flüssigkeitsphase. Die Separationseinrichtung kann als ein Separationsraum ausgebildet sein, der eine Reduzierung der Strömungsgeschwindigkeit des geförderten Multiphasengemisches bewirkt. Der Absetzraum ist dann ein Teil des Separationsraumes oder ein besonderer Bereich der Separationseinrichtung. Es sind auch andere Separationseinrichtungen zum Trennen von Feststoffphase und Flüssigkeitsphase möglich, beispielsweise Zyklonführungen, um eine Separation über die Massenträgheit zu bewirken. Von dem Absetzraum ist ein Reservoir getrennt, das für die von Feststoffen separierte Flüssigkeitsphase ausgebildet ist, wobei diese Trennung nicht durch strömungstechnische Hindernisse ausgebildet sein muss, vielmehr kann sich das Reservoir auch in einem Bereich oberhalb des Absetzraumes befinden, so dass gewährleistet ist, dass in der Flüssigkeitsphase befindliches Feststoffmaterial in den Absetzraum absinken kann.

Eine Weiterbildung der Vorrichtung sieht vor, dass der Absetzraum von dem Reservoir über eine Trennwand getrennt ist, an der ein Überlauf oder in der ein Durchlass ausgebildet ist. Das Reservoir kann somit eine physikalische Barriere zu dem Absetzraum aufweisen, so dass es bei hohen Strömungsgeschwindigkeiten oder Turbulenzen innerhalb des Absetzraumes nur zu einer Aufwirbelung der abgesetzten Feststoffphase innerhalb des Absetzraumes kommt und keine Feststoffpartikel in das Reservoir gelangen. Innerhalb der Trennwand kann ein Durchlass vorhanden sein, der beispielsweise gesteuert geöffnet und geschlossen werden kann, um so füllstandsabhängig das Reservoir mit separierter Flüssigkeitsphase versorgen zu können. Sofern die Trennwand einen Überlauf aufweist, ist ein Minimum an Flüssigkeitsphase und Feststoffphase in dem Absetzraum vorhanden, eine Rezirkulation findet erst dann statt, wenn in dem Absetzraum ein Minimalvolumen an Flüssigkeitsphase und Feststoffphase vorhanden ist.

Vor der Rezirkulationsleitung kann ein Filter angeordnet sein, um nicht vollständig separierte Feststoffteile zurückzuhalten.

Ein getrennter Gasauslass für die separierte Gasphase kann in der Separationseinrichtung ausgebildet sein, um eine getrennte Ableitung der Gasphase ermöglichen zu können. Der Gasauslass liegt dabei vorteilhafterweise höher als der Auslass für die Flüssigkeitsphase und Feststoffphase.

Die Separationseinrichtung kann in einem von der Multiphasenpumpe getrennten Gehäuse angeordnet sein, was insbesondere dann vorteilhaft ist, wenn die Separationseinrichtung an mehrere Multiphasenpumpen angeschlossen wird. Für den Fall von mehreren, parallel geschalteten Multiphasenpumpen, die mit einer außerhalb der Pumpengehäuse der Multiphasenpumpen angeordneten Separationseinrichtung verbunden sind, können einzelne Pumpen zu Reparationszwecken abgeschaltet werden. Weiterhin können dadurch herkömmliche Multiphasenpumpen einfach nachgerüstet werden, so dass sich der bauliche Aufwand verringert. Häufig sind räumliche Einschränkungen vorhanden, so dass großvolumige Multiphasenpumpen mit integrierten Separationseinrichtungen nicht realisiert werden können. In der Separationseinrichtung ist zur Bewirkung der Separation der Gasphase von der Flüssigkeitsphase und der Flüssigkeitsphase von der Feststoffphase eine strömungsberuhigte Zone ausgebildet, in der die Strömungsgeschwindigkeit des aus der Pumpe kommenden Multiphasengemisches reduziert wird, vorteilhafterweise ist in der strömungsberuhigten Zone die Strömungsgeschwindigkeit nahe Null, um die Separation der einzelnen Phasen zu erleichtern und zu ermöglichen.

Vor dem Einlass der Multiphasenpumpe kann eine Steigleitung und/oder ein U-förmiger Rohrabschnitt angeordnet sein, wodurch vor dem Einlass Flüssigkeitsphase innerhalb der Rohrleitung gesammelt werden kann, die dann bei Erreichen eines bestimmten Druckniveaus von der Gasphase in die Multiphasenpumpe hineingedrückt wird. Durch diese Flüssigkeitsslugs wird die innerhalb der Separationseinrichtung befindliche Flüssigkeitsphase und Feststoffphase ausgetragen, wodurch zudem eine Wärmeabfuhr durch Austausch der in dem Pumpengehäuse oder der Separationseinrichtung befindlichen, erwärmten Stoffe bewirkt wird, was sich positiv auf die Fähigkeit der Pumpe auswirkt, Mehrphasengemische mit einem sehr hohen Gasanteil zu fördern.

In der Separationseinrichtung kann eine separate, verschließbare Austragsöffnung für die separierte Feststoffphase ausgebildet sein, die Austragsöffnung ist von dem Auslass, durch den die Flüssigkeitsphase und gegebenenfalls auch die Gasphase abtransportiert werden, verschieden. Der Austragsöffnung kann ein Zyklonabscheider, eine Zellenradschleuse und/oder ein Stellventil zugeordnet sein, um nach Möglichkeit ohne Unterbrechung der Fördertätigkeit die Ansammlung der Feststoffphase in dem Absetzraum aus der Separationseinrichtung entfernen zu können.

Nachfolgend werden Ausführungsbeispiele der Erfindung anhand der beigefügten Figuren näher erläutert. Es zeigen:
- Figur 1-: eine schematische Schnittdarstellung durch eine Pumpe;
- Figur 2 -: eine schematische Schnittdarstellung einer Separationseinrichtung;
- Figur 3 -: eine Pumpe zum Anschluss an die Separationseinrichtung gemäß Figur 2;
- Figur 4 -: eine Variante der Separationseinrichtung; sowie
- Figuren 5 bis 7 -: eine Parallelanordnung von Pumpen mit einer Separationseinrichtung.

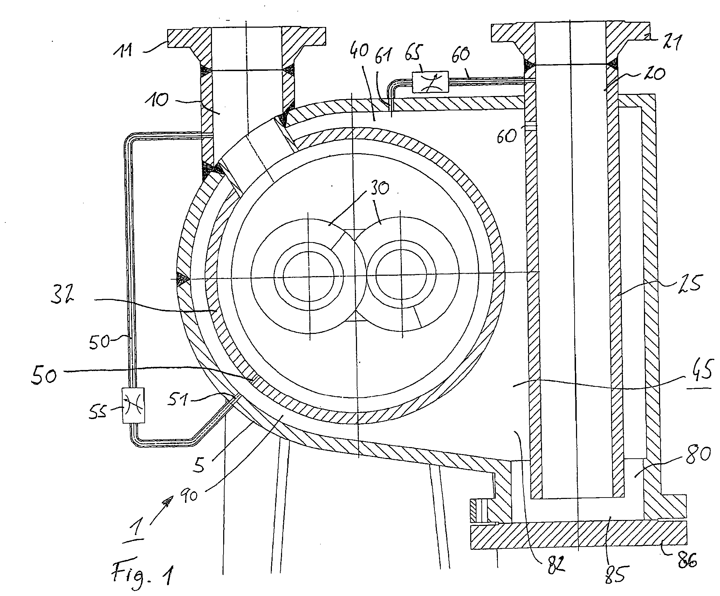

In der Figur 1 ist eine Vorrichtung zum Verpumpen eines mit Feststoffen beladenen Multiphasengemisches dargestellt, die als Multiphasenpumpe 1 ausgebildet ist. Die Multiphasenpumpe 1 weist ein Gehäuse 5 auf, an dem ein Einlass 10 mit einem Einlassstutzen 11 und ein Auslass 20 mit einem Auslassstutzen 21 angeordnet sind. Innerhalb des Gehäuses ist ein Schraubenspindelpaar 30 angeordnet, das in einem Fördergehäuse 32 gelagert ist. Die Schraubenspindeln 30 können als zweispindelige, zweiflutige Schraubenspindeln angeordnet sein, wobei die Strömungsrichtung von der Mitte der Spindeln 30 nach außen verlaufen kann. Das geförderte, feststoffbeladene Multiphasengemisch wird dabei durch den Einlass 10 mittig zu den Spindeln 30 geleitet, wobei bis zu den Spindeln 30 der sogenannte Saugraum ausgebildet ist. In dem dargestellten Ausführungsbeispiel umgibt der Saugraum die Spindeln 30. Von der Mitte der Spindeln 30 wird das Multiphasengemisch senkrecht zu der Bildebene beidseitig nach außen geführt und gelangt von dort in den Druckraum 40, der die Spindeln 30 mit dem die Spindeln 30 umschließenden Fördergehäuse 32 umgibt.

Das Gehäuse 5 weist unterhalb der Spindeln 30 eine nach unten gerichtete Schräge und eine druckseitige Separationseinrichtung 45 auf, die durch eine Querschnittsvergrößerung des Druckraumes 40 in Richtung auf den Auslass 20 ausgebildet wird. Durch die Bereitstellung eines vergrößerten Volumens und Strömungsquerschnittes verringert sich die Strömungsgeschwindigkeit innerhalb des Druckraumes 40, so dass es zu einer Separation der in dem Multiphasengemisch vorhandenen Phasen kommt. Die Gasphase mit dem spezifisch geringsten Gewicht wird nach oben steigen, die Flüssigkeitsphase wird sich in der Mitte separieren, die Feststoffphase mit dem spezifisch höchsten Gewicht wird sich am Boden absetzen.

In einer oberen Region des Gehäuses 5 ist ein Gasauslass 61 ausgebildet, durch den separierte Gasphase getrennt abgeleitet werden kann. An dem Gasauslass 61 ist eine Leitung 60 angeschlossen, in der ein Ventil 65 angeordnet ist, vorteilhafterweise ein Stellventil, das in Abhängigkeit von der gewünschten Fördermenge geöffnet oder geschlossen werden kann. Durch den Gasauslass 61 ist es möglich, die Gasphase nach der Druckerhöhung durch die Schraubenspindeln 30 separat zu transportieren, alternativ ist es möglich, dass die Leitung 60 in den Auslass 20 mündet, um die Gasphase zusammen mit den übrigen Bestandteilen des Multiphasengemisches durch den Auslass 20 abzutransportieren. Wird das Ventil 65 geschlossen, kann die Gasphase über den gemeinsamen Auslass 20 abtransportiert werden, der im Bodenbereich unterhalb der Spindeln 30 angeordnet ist. Statt einer externen Leitung 60 mit einem Ventil 65 ist es möglich, im oberen Bereich des Gehäuses 5 am Auslass 20 eine Durchgangsbohrung vorzusehen, so dass eine direkte Kurzschlussleitung 60 innerhalb eines senkrecht nach unten gerichteten Auslassrohres 25 eine Kurzschlussleitung zum Auslass 20 realisiert wird. Dadurch wird auf einfache Weise eine Separation und Abfuhr der Gasphase aus dem Druckraum 40 ermöglicht. Der Auslass 20 führt druckseitig das Multiphasengemisch nach oben aus dem Gehäuse, die Mündung des Auslasses 20 in dem Druckraum 40 ist jedoch unterhalb der Spindeln 30 angeordnet. Grundsätzlich ist zu beachten, dass immer eine Mindestquerschnittsfläche zum Durchtritt der separierten Gasphase in eine Transportleitung vorhanden ist, da anderenfalls eine bevorzugte Abförderung der Flüssigkeitsphase durch den Auslass 20 erfolgen würde. Im Bereich der Ausgestaltung des Gehäuses 5 mit dem vergrößerten Volumen, das als Separationseinrichtung 45 dient, ist im unteren Bereich ein Absetzraum ausgebildet, um Feststoffpartikel aufzunehmen, die sich aufgrund der Strömungsberuhigung unten absetzen. Der Absetzraum 80 ist am unteren Ende des Gehäuses 5 angeordnet und befindet sich unterhalb der Druck erhöhenden Schraubenspindeln 30. Von diesen Schraubenspindeln 30 führt eine schräg nach unten gerichtete Wand des Gehäuses 5 zum Absetzraum 80, so dass auf einem höheren Niveau befindliche Feststoffe nach unten geleitet werden. In dem Absetzraum 80 ist eine Austragsöffnung 85 ausgebildet, die durch einen Verschluss 86 verschlossen ist. Oberhalb des Absetzraumes 80 ist ein strömungsberuhigter Bereich 82 ausgebildet, um die Separation von Flüssigkeitsphase und Gasphase durch Schwerkrafttrennung zu erleichtern. Statt eines permanenten Verschlusses 86, der als Revisionsklappe ausgebildet ist, kann an der Austragsöffnung 85 ein Ventil, ein Zyklonabscheider oder eine Zellradschleuse angeordnet sein, so dass bei Bedarf die angesammelte Feststoffphase aus dem Absetzraum 80 abtransportiert werden kann.

Oberhalb des Absetzraumes 80 ist auf der Druckseite 40 in dem Gehäuse 5 ein Flüssigkeitsauslass 51 vorgesehen, in dem eine Rezirkulationsleitung 50 angeschlossen ist. Die Rezirkulationsleitung 50 führt von der Druckseite 40 zur Saugseite in den Einlass 10. Innerhalb der Rezirkulationsleitung 50 ist ein Stellventil 55 vorgesehen, das bei Bedarf geöffnet oder geschlossen werden kann, um eine geregelte Rezirkulation von der Druckseite 40 auf die Saugseite zu ermöglichen. Der Flüssigkeitsauslass 51 für die Rezirkulationsleitung 50 liegt oberhalb des Absetzraumes 80 und unterhalb der Schraubenspindeln 30. Durch die Anordnung des Flüssigkeitsauslasses 51 oberhalb des Absetzraumes 80 wird lediglich Flüssigkeitsphase in die Rezirkulationsleitung 50 geleitet, aus der sich bereits die Feststoffphase abgesetzt hat. Durch die Absetzbewegung und die Separation in dem strömungsberuhigten Bereich 82 hat sich ein Reservoir 90 oberhalb der abgesetzten Feststoffphase gebildet, aus dem die rezirkulierte Flüssigkeit entnommen wird.
In der Figur 1 ist entweder als Alternative oder zusätzlich zu der beschriebenen Rezirkulationsleitung 50 mit dem Ventil 55 eine weitere Rezirkulationsleitung 50 in Gestalt einer Öffnung oder Bohrung in dem Fördergehäuse 32 vorgesehen. Die Bohrung oder Öffnung stellt eine Verbindung von dem Saugraum innerhalb des Fördergehäuses 32 zu dem Druckraum 40 außerhalb des Fördergehäuses 32 und innerhalb des Gehäuses 5 her. Durch die Orientierung der Öffnung 50 nach oben werden die schwereren Feststoffpartikel nicht oder zumindest weniger bevorzugt zu der Saugseite transportiert, zudem ist die Anordnung der Öffnung 50 so weit geodätisch oben positioniert, dass bereits eine Separation der Feststoffphase und der Flüssigkeitsphase stattgefunden hat und nur separierte Flüssigkeitsphase den entsprechenden Pegelstand erreichen kann.

Während eines Betriebes mit gemischten Zusammensetzungen des Multiphasengemisches ist der gesamte Druckraum 40 mit dem Multiphasengemisch gefüllt. Sofern die Gasleitungen 60 verschlossen sind, wird das gesamte zu fördernde Multiphasengemisch durch das Steigrohr 25 und den Auslass 20 aus der Multiphasenpumpe 1 mit der in dem Gehäuse 5 integrierten Separationseinrichtung 45 abtransportiert. Das Steigrohr 25 mündet dabei unterhalb des Niveaus der Spindeln 30 und des Fördergehäuses 32 und transportiert das Multiphasengemisch aus dem Druckraum 40 zu dem Flansch 21. Separierte und im Absetzraum 80 gelagerte Feststoffphase wird dabei zusammen mit der Flüssigkeitsphase ausgetragen. Reicht die Strömungsgeschwindigkeit nicht aus, um die im Absetzraum 80 vorhandenen Feststoffe auszutragen, kann während des Betriebes durch eine Zellradschleuse oder eine andere geeignete Einrichtung die Feststoffansammlung aus dem Druckraum 40 entfernt werden. Alternativ dazu ist es möglich, durch sogenannte Flüssigkeitsslugs die Feststoffablagerungen auszuschwemmen.

Durch die Positionierung des Flüssigkeitsauslasses 51 in Schwerkraftrichtung oberhalb des Absetzraumes 80 wird von Feststoffphase befreite Flüssigkeitsphase rezirkuliert, um die Spalte zwischen den Schraubenspindeln 30 und dem Fördergehäuse 32 abzudichten und zu schmieren. Die abrasionsfördernden Feststoffpartikel werden weitestgehend zurückgehalten, da sie sich unterhalb des Reservoirs 90 in dem Absetzbereich 80 befinden. Eine physikalische Trennung zwischen dem Reservoir 90 und dem Absetzraum 80 ist im dargestellten Ausführungsbeispiel nicht vorgesehen, es können Strömungshindernisse innerhalb des Gehäuses 5 im Druckraum 40 angeordnet sein, die Feststoffpartikel zurückhalten oder ein Transport in Richtung auf den Flüssigkeitsauslass 51 verhindern oder erschweren. Diese Strömungshindernisse können beispielsweise in Gestalt von Labyrinthführungen oder Staustufen ausgebildet sein.

Ein weiterer Auslass 70 ist an dem unteren Ende des Gehäuses 5 angeordnet, der zur Entleerung der Pumpe bei Wartungs- und Reparaturzwecken dient und im normalen Betrieb verschlossen ist.

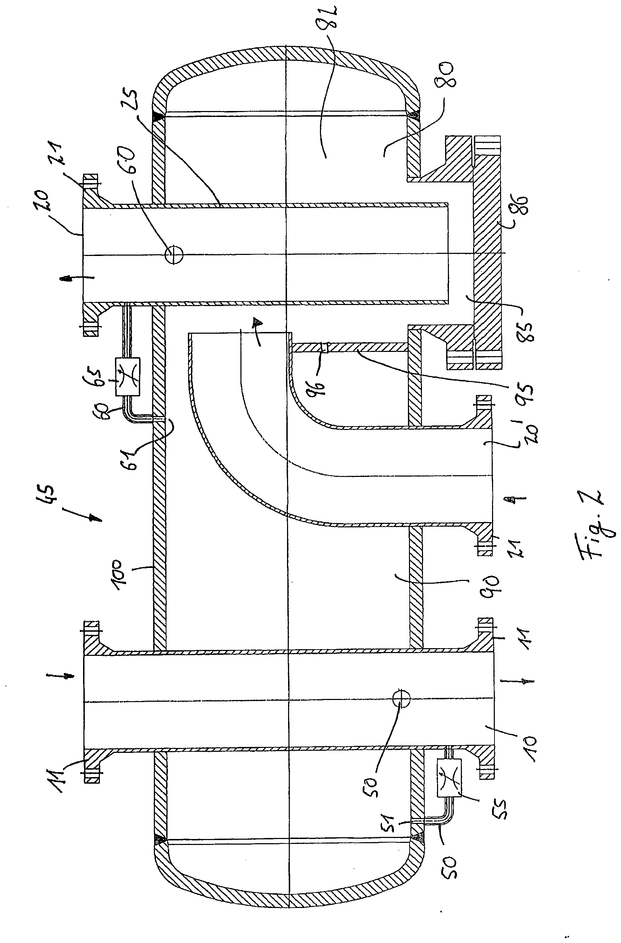

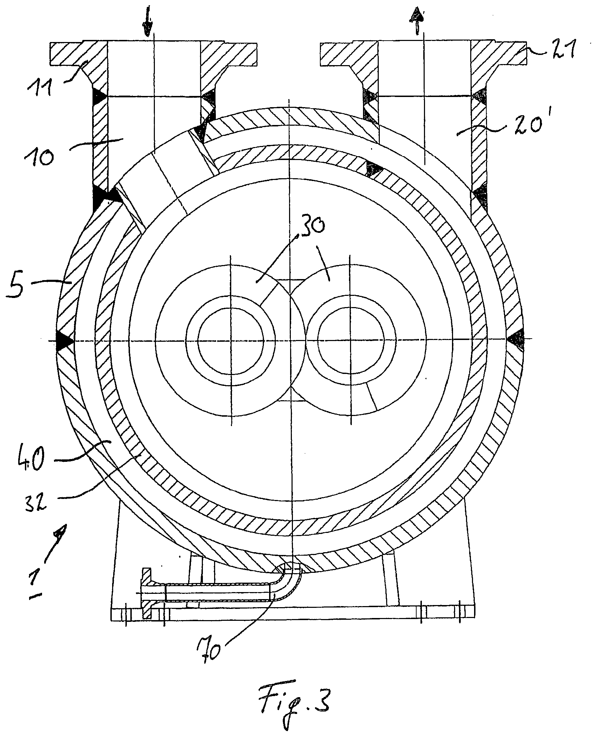

Eine Variante der Vorrichtung ist in der Figur 2 dargestellt, in der die Separationseinrichtung 45 als separates Bauteil ausgebildet ist. Die Separationseinrichtung 45 kann an eine Multiphasenpumpe 1 gemäß Figur 3 angeschlossen werden.

In der Figur 3 ist eine herkömmliche Multiphasenpumpe 1 in Gestalt einer Schraubenspindelpumpe dargestellt. Auch hier sind die Schraubenspindeln 30 innerhalb eines Fördergehäuses 32 angeordnet, das innerhalb eines Druckraumes 40 in dem Gehäuse 5 gelagert ist. Über den Einlass 10 am Einlassstutzen 11 wird das zu fördernde Medium zu den Spindeln 30 geführt, von dort senkrecht zur Bildebene nach außen in den Druckraum 40 transportiert, der das Fördergehäuse 32 der Förderschrauben 30 umgibt. Von dem Druckraum 40, der als Ringraum ausgebildet ist, wird das verpumpte Multiphasengemisch durch den Pumpenauslass 20' abtransportiert.

In der Figur 2 ist mit korrespondierenden Anschlussstutzen die Separationseinrichtung 45 als getrenntes Bauteil dargestellt. Die Einlassstutzen 11 für den Einlass 10 dienen zum Anschluss an den Einlassstutzen 11 der Multiphasenpumpe 1 gemäß Figur 3, der Einlassstutzen 11 führt senkrecht durch ein rohrförmiges Gehäuse 100. In dieses Gehäuse 100 führt auch der Pumpenauslass 20', der über Auslassstutzen 21 mit dem Auslassstutzen 21 der Multiphasenpumpe 1 gemäß Figur 3 verbunden ist. Von dem Einlass 10, durch die Multiphasenpumpe 1 und den Pumpenauslass 20' der Multiphasenpumpe 1 wird das Multiphasengemisch gemäß der Pfeile in die Separationseinrichtung 45 geleitet und von dort durch den Auslass 20 zu den Transportleitungen oder einer Weiterverarbeitungseinrichtung. Der Einlass der Separationseinrichtung 45 ist als 90°-Rohr ausgebildet, so dass das Multiphasengemisch im Wesentlichen waagerecht in die Separationseinrichtung 45 transportiert wird.

In der Separationseinrichtung 45 ist ein Absetzraum 80 mit einer strömungsberuhigten Zone 82 vorgesehen, in den das aus der Multiphasenpumpe 1 verpumpte Multiphasengemisch eingeleitet wird. Auch hier ist an der Unterseite des Absetzraumes 80 eine Austragsöffnung 85 mit einem Verschluss 86 vorgesehen. Von dem Absetzraum 80 führt das Steigrohr 25 senkrecht nach oben.

Der Absetzraum 80 ist über eine Trennwand 95, in der ein Durchlass 96 ausgebildet ist, mit einem Reservoir 90 verbunden. In dem Reservoir 90 wird überwiegend feststofffreie Flüssigkeitsphase gesammelt, die durch eine Rezirkulationsleitung 50 wieder dem Einlass 10 zugeleitet werden kann. Auch hier ist in der Rezirkulationsleitung 50 in einem Ausführungsbeispiel ein Stellventil 55 angeordnet, alternativ oder ergänzend dazu kann eine Kurzschlussleitung 50 durch eine Bohrung innerhalb des Saugstutzens des Einlasses 10 angeordnet sein. Zur Verbesserung der Qualität der Flüssigkeitsphase ist es möglich, mehrere Trennwände 95 hintereinander vor der Rezirkulationsleitung 50 anzuordnen, die jeweils über Durchlässe 96 oder Überläufe einen Transport von Flüssigkeitsphase in Richtung auf die Kurzschlussleitung 50 ermöglichen. Dadurch wird eine Reihe von Absetzräumen 80 und strömungsberuhigten Bereichen 82 innerhalb des Gehäuses 100 geschaffen. Es ist also eine mehrstufige Separation von Flüssigkeitsphase und Feststoffphase vorgesehen und möglich.

Im oberen Bereich des Gehäuses 100 ist ein Gasauslass 61 mit einer Gasleitung 60 und einem Ventil 65 vorgesehen, so dass die separierte Gasphase innerhalb des Gehäuses 100 entweder dem Auslass 20 oder einer separaten Gasleitung zugeführt werden kann. Ähnlich wie bei der Flüssigkeitsphase mit der Rezirkulationsleitung 50 ist auch hier eine Bohrung 60 als Leitung von dem Separationsraum innerhalb des Gehäuses 100 zum Auslass 20 vorgesehen.

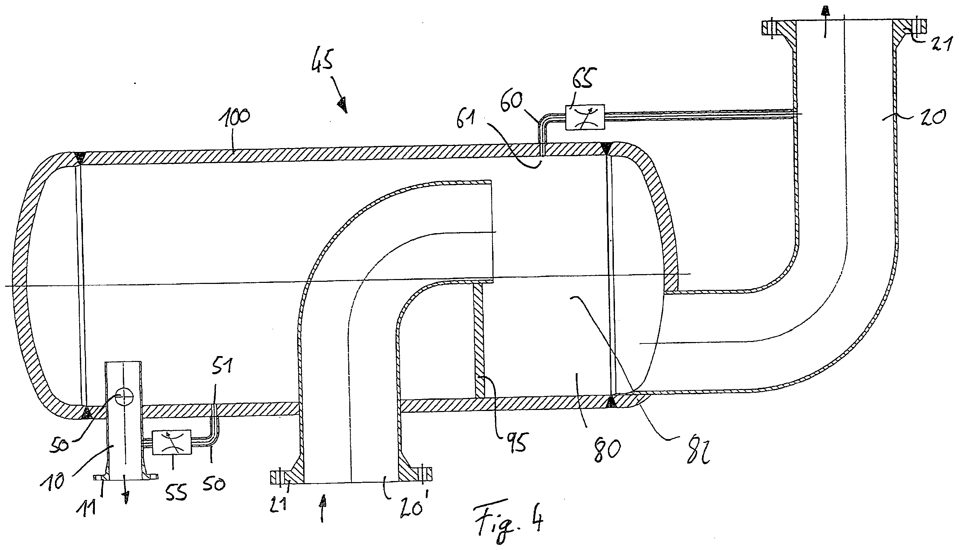

Eine Variante der Vorrichtung ist in der Figur 4 dargestellt. Das Prinzip der separaten Separationseinrichtung 45 entspricht dem der Figur 2, allerdings ist der Einlass 10 für die Multiphasenpumpe von der Quelle nicht durch die Gehäusewand hindurchgeführt. Der Anschluss an die Multiphasenpumpe 1 gemäß Figur 3 erfolgt über die Auslassstutzen 21, wohingegen der Einlass 10 der Multiphasenpumpe 1 an ein Förderrohr oder dergleichen angeschlossen ist. In der Separationseinrichtung 45 gemäß Figur 4 wird dann von der Rezirkulationsleitung 50 die separierte Flüssigkeitsphase über einen nicht mit der Förderleitung verbundenen Einlass 10 mit der Saugseite verbunden, so dass die separierte Flüssigkeitsphase saugseitig in den Einlass 10 der Schraubenspindelpumpe geleitet wird.

Auf der Saugseite der Multiphasenpumpe 1 können Vorrichtungen zum Sammeln von Flüssigkeitsphase vorgesehen sein, beispielsweise U-förmige Rohrleitungen, Tanks oder Reservoirs, über die gesteuert Mengen an Flüssigkeitsphase der Einlassseite zugeleitet werden, so dass einerseits eine große Wärmemenge aus dem Gehäuse 5 der Multiphasenpumpe 1 abtransportiert werden kann und andererseits abgelagerte Feststoffphase aus der Separationseinrichtung 45 ausgetragen werden können.

In der Figur 4 ist der Auslass 20 von dem Absetzraum 80 waagerecht abgehend, so dass abgesetzte Feststoffphase leicht aus dem Absetzraum 80 heraustransportiert werden kann. Durch den nach oben abknickenden Auslass 20 wird ein gewisser Rückstau des Multiphasengemisches bewirkt, so dass eine Separation und ein Absinken der Feststoffphase im Absetzraum 80 bewirkt werden.

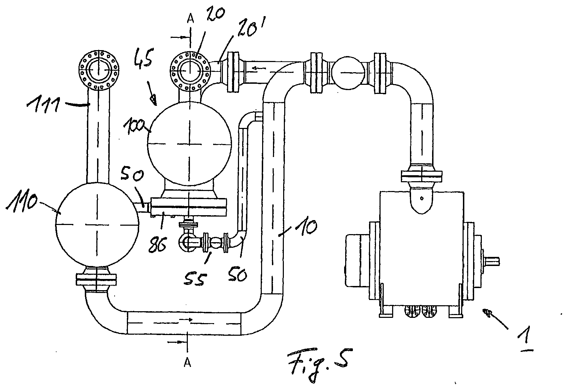

In der Figur 5 ist in einer Seitenansicht eine Anordnung mehrerer Multiphasenpumpen 1 in Parallelschaltung gezeigt, die mit einer separaten Separationseinrichtung 45 und einer vorgeschalteten Sammeleinrichtung 110 ausgestattet ist, in die aus einem nicht dargestellten Förderrohr das geförderte Multiphasengemisch mittels eines Einlassstutzens 111 zugeführt und zunächst gesammelt wird. Von dem Sammelbehälter 110 führen zu jeder Multiphasenpumpe 1 eine Einlassverrohrung zu dem Einlass 10 der jeweiligen Multiphasenpumpe 1. Die Einlassverrohrung ist U-förmig ausgebildet und dient dazu, kontrolliert Flüssigkeitsslugs zu erzeugen. Durch die U-förmige Führung der Einlassverrohrung sammelt sich im unteren Bereich die Flüssigkeit, wobei ein ausreichend großer Rohrleitungsquerschnitt vorhanden ist, damit keine pneumatische Förderung der übrigen Medien auftritt. Innerhalb des U-förmigen Abschnittes der Einlassverrohrung separieren sich die feststoffbeladene Flüssigkeitsphase und die Gasphase im horizontalen Rohrleitungsabschnitt. Die feststoffbeladene Flüssigkeitsphase wird zurückgehalten und gesammelt, während die Gasphase oberhalb davon durch die Rohrleitung strömt. Mit zunehmenden Flüssigkeitsvolumen innerhalb des horizontalen Rohrleitungsabschnittes verringert sich der Fließquerschnitt für die Gasphase, so dass aufgrund der Geschwindigkeitsunterschiede zwischen der Gasphase und der feststoffbeladenen Flüssigkeitsphase an der Phasengrenze Wellen auftreten, die den Fließweg für die Gasphase vollständig versperren. Wenn dieses Phänomen auftritt, schiebt die Gasphase den so gebildeten Flüssigkeitspfropfen vor sich her und drückt ihn über die Steigstrecke, die sich an den horizontalen Rohrleitungsabschnitt anschließt, hinauf und in den Einlass 10 der Multiphasenpumpe 1. Die Frequenz der Flüssigkeitsslugs sowie deren Volumen werden von dem Zusammenspiel zwischen den einzelnen Förderparametern wie Fördermenge und Gasanteil und den Geometrieparametern der Rohrleitung wie Durchmesser, Länge des horizontalen Teilstückes sowie Höhendifferenz der Steigstrecke bestimmt.

In der Figur 5 ist neben dem Sammelbehälter 110 das Gehäuse 100 der separaten Separationseinrichtung 45 zu erkennen, das über Pumpenauslässe 20' mit den Multiphasenpumpen 1 verbunden ist. Von der Separationseinrichtung 45 führt ein gemeinsamer Auslass 20 zu Transportleitungen. Eine Rezirkulationsleitung 50 mit einem Ventil 55 ist an der Unterseite des Gehäuses 100 angeordnet und führt in den Einlass 10 der Pumpe 1. Je nach Anordnung und Einmündung der Rezirkulationsleitung 50 in den aufsteigenden Bereich der Zuleitung kann über ein gesteuertes Zuführen separierter Flüssigkeitsphase die Frequenz und das Volumen der Flüssigkeitsslugs eingestellt werden. Eine weitere Rezirkulationsleitung 50, die mit einem Ventil versehen sein kann, führt von der Separationseinrichtung 45 zu dem Sammelbehälter 110, so dass gesteuert werden kann, in welchem Abschnitt der Einlassverrohrung oder der Saugseite die separierte Flüssigkeitsphase rezirkuliert wird.

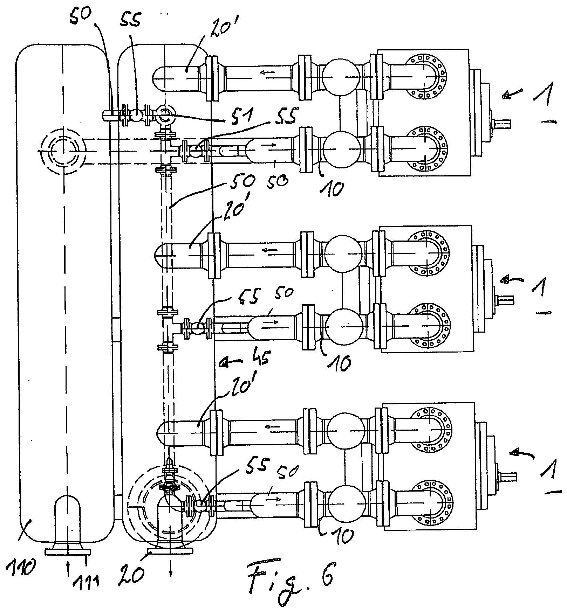

In der Figur 6 ist die Parallelanordnung dreier Multiphasenpumpen 1 als Draufsicht auf eine Anordnung gemäß Figur 5 zu erkennen. Das aus einer Quelle zuführbare Multiphasengemisch wird durch einen Einlassstutzen 111 in den Sammelbehälter 110 geleitet. Von diesem Sammelbehälter 110 führen drei U-förmig ausgebildete Einlassrohre unterhalb der Separationseinrichtung 45 hindurch zu den Einlässen 10 der im dargestellten Ausführungsbeispiel drei Multiphasenpumpen 1. Nach dem Verpumpen wird das Multiphasengemisch in die Separationseinrichtung 45 durch die Pumpenauslässe 20' geleitet, dort separiert und durch den Auslass 20 abtransportiert. An der Unterseite des Gehäuses 100 ist ein gemeinsamer Flüssigkeitsauslass 51 angeordnet, der mit einer Rohrleitung verbunden ist, von der die Rezirkulationsleitungen 50 zu den Einlässen 10 und dem Sammelbehälter 110 auf der Saugseite der Pumpen 1 führen. Der jeweiligen Rezirkulationsleitung 50 ist ein Stellventil 55 zugeordnet, um abgestimmt auf die jeweilige Pumpe 1 separierte Flüssigkeitsphase gesteuert zuzuleiten. Dadurch ist es beispielsweise möglich, beim Anfahren der Pumpe eine vollständige Öffnung der Rezirkulationsleitung 50 und damit einen verringerten Gegendruck bereitstellen zu können, damit eine weitgehend lastfreie und energieeffiziente Inbetriebnahme einer Pumpe 1 stattfinden kann.

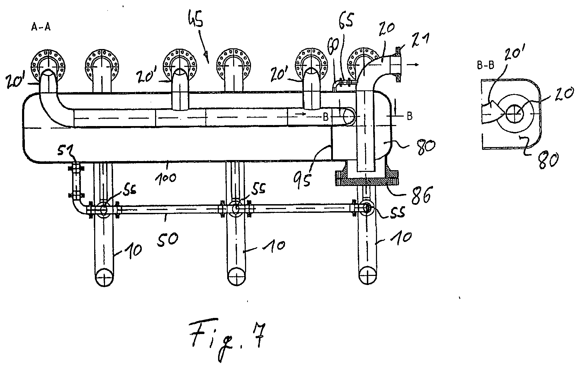

In der Figur 7 ist eine Schnittdarstellung entlang der Linie A-A der Figur 5 gezeigt. Neben der Einlassverrohrung auf der Saugseite ist die separate Separationseinrichtung 45 in Schnittdarstellung gezeigt. In das Gehäuse 100 führen die Pumpenauslässe 20' in ein gemeinsames Rohr, das in den Absetzraum 80 innerhalb des Gehäuses 100 mündet. Die Trennwand 95 ist ebenso wie der Verschluss 86 gezeigt, der Aufbau entspricht ansonsten im Wesentlichen dem Aufbau gemäß Figur 4, die Kurzschlussleitung 60 mit einem Ventil 65 für die Gasphase führt aus dem oberen Bereich des Gehäuses 100 direkt zum Auslass 20.

In der rechten Darstellung der Figur 7, die eine Schnittdarstellung entlang der Linie B-B ist, ist zu erkennen, dass das Sammelrohr der Pumpenauslässe 20' im Wesentlichen waagerecht in den Absetzraum 80 mündet. Von dort aus führt der Auslass 20 im Wesentlichen senkrecht nach oben und knickt dann waagerecht ab, um das Multiphasengemisch abtransportieren zu können. Nach der Separation der Flüssigkeitsphase von der Feststoffphase in dem Absetzraum wird die separierte Flüssigkeitsphase über die Trennwand 95 hinweg in das Gehäuse 100 der Separationseinrichtung 45 geleitet. Von der am Boden ausgebildeten Öffnung als Flüssigkeitsauslass 51 führt die vom Feststoff befreite Flüssigkeitsphase über die Rezirkulationsleitung 50 mit den individuellen Ventilen 55 zu der Einlassverrohrung 10 auf der Saugseite der Multiphasenpumpen 1. An der Unterseite des Absetzraumes 80 ist der Verschluss 86 zu erkennen.

## Patentansprüche

1. Verfahren zum Betreiben einer Multiphasenpumpe, die einen saugseitigen Einlass (10) und einen druckseitigen Auslass (20) aufweist und mit der ein mit Feststoffen beladenes Multiphasengemisch verpumpt wird, das die Schritte aufweist:
a. Verpumpen des Multiphasengemisches in einen druckseitigen Separationsraum (45),
b. Separieren einer Gasphase von einer Flüssigkeitsphase und einer Feststoffphase in dem Separationsraum (45),
c. Separieren der Flüssigkeitsphase von der Feststoffphase in dem Separationsraum (45),
d. Zuleiten eines Teils der von der Feststoffphase befreiten Flüssigkeitsphase zu der Saugseite, **dadurch gekennzeichnet, dass**
e. das Zuleiten der Flüssigkeitsphase zu der Saugseite durch eine Rezirkulationsleitung (50) erfolgt, in der ein Ventil (55) angeordnet ist, das nach dem Anfahren und nach Erreichen eines stabilen Betriebspunktes zur Aufnahme des Fördervorganges und der Druckerhöhung des Multiphasengemisches geschlossen wird.

2. Verfahren nach Anspruch 1, **dadurch gekennzeichnet, dass** die Feststoffphase kontinuierlich über eine Zellradschleuse oder Zyklonabscheider oder diskontinuierlich über ein Ventil, Flüssigkeitsslugs oder eine Revisionsklappe abtransportiert wird.

3. Verfahren nach einem der voranstehenden Ansprüche, **dadurch gekennzeichnet, dass** die von der Feststoffphase getrennte Flüssigkeitsphase geregelt der Saugseite zugeführt wird.

4. Verfahren nach einem der voranstehenden Ansprüche, **dadurch gekennzeichnet, dass** die von der Feststoffphase getrennte Flüssigkeitsphase vor dem Zuleiten zu der Saugseite gefiltert wird.

5. Verfahren nach einem der voranstehenden Ansprüche, **dadurch gekennzeichnet, dass** zum Abtransportieren der separierten Feststoffphase Flüssigkeitsphase stoßweise der Multiphasenpumpe zugeleitet und in den Separationsraum (45) eingebracht wird.

6. Verfahren nach Anspruch 5, **dadurch gekennzeichnet, dass** die Flüssigkeitsphase gesammelt und dann stoßweise in den Separationsraum (45) eingebracht wird.

7. Verfahren nach einem der voranstehenden Ansprüche, **dadurch gekennzeichnet, dass** die Feststoffphase sensorgesteuert oder turnusmäßig aus dem Separationsraum (45) abtransportiert wird.

8. Verfahren nach einem der voranstehenden Ansprüche, **dadurch gekennzeichnet, dass** das Zuleiten der Flüssigkeitsphase zu der Saugseite durch eine Rezirkulationsleitung (50) erfolgt, in der ein Ventil (55) angeordnet ist, das beim Anfahren vollständig geöffnet wird.

9. Verfahren nach einem der voranstehenden Ansprüche, **dadurch gekennzeichnet, dass** das Zuleiten der Flüssigkeitsphase zu der Saugseite durch eine Rezirkulationsleitung (50) erfolgt, in der ein Ventil (55) angeordnet ist, dessen Durchlassquerschnitt in Abhängigkeit von Betriebsparametern eingestellt wird.

## Claims

1. Method for operating a multiphase pump having a suction-side inlet (10) and a discharge-side outlet (20) and with which a multiphase mixture loaded with solids is pumped, comprising the steps of:
a. pumping the multiphase mixture into a discharge-side separation chamber (45),
b. separating a gaseous phase from a liquid phase and a solid phase in the separation chamber (45),
c. separating the liquid phase from the solid phase in the separation chamber (45),
d. supplying a portion of the liquid phase freed from the solid phase to the suction side, **characterized in that**
e. the supply of liquid phase to the suction side is carried out by means of a recirculation line (50) in which a valve (55) is arranged which, after startup and after stable operation is achieved, is closed for purposes of initiating the pumping action and the increase in pressure of the multiphase mixture.

2. Method according to claim 1, **characterized in that** the solid phase is continuously removed by means of a rotary valve or cyclone separator or discontinuously by means of a valve, liquid slugs or an inspection flap.

3. Method according to one of the preceding claims, **characterized in that** the liquid phase separated from the solid phase is supplied to the suction side in a controlled manner.

4. Method according to one of the preceding claims, **characterized in that** the liquid phase separated from the solid phase is filtered prior to being supplied to the suction side.

5. Method according to one of the preceding claims, **characterized in that** liquid phase is supplied intermittently to the multiphase pump and introduced into the separation chamber (45) for purposes of removing the solid phase.

6. Method according to claim 5, **characterized in that** the liquid phase is collected and then intermittently introduced into the separation chamber (45).

7. Method according to one of the preceding claims, **characterized in that** the solid phase is removed from the separation chamber (45) under sensor control or at regular intervals.

8. Method according to one of the preceding claims, **characterized in that** the supply of liquid phase to the suction side is carried out by means of a recirculation line (50), in which a valve (55) is arranged which is completely open at startup.

9. Method according to one of the preceding claims, **characterized in that** the supply of liquid phase to the suction side is carried out by means of a recirculation line (50) in which a valve (55) is arranged, the opening cross section of which is adjusted according to operating parameters.

## Revendications

1. Procédé pour faire fonctionner une pompe multiphase ayant une entrée (10) côté aspiration et une sortie (20) côté refoulement et utilisée pour pomper un mélange multiphasique chargé de solides, comprenant les étapes consistant à :
a. pomper le mélange multiphasique jusque dans une chambre de séparation (45) côté refoulement,
b. séparer une phase gazeuse d'une phase liquide et d'une phase solide dans la chambre de séparation (45),
c. séparer la phase liquide de la phase solide dans la chambre de séparation (45),
d. amener une partie de la phase liquide, libérée de la phase solide, vers le côté aspiration,
**caractérisé en ce que**
e. la phase liquide est amenée vers le côté aspiration par une conduite de recirculation (50) dans laquelle est disposée une vanne (55) qui est fermée après le démarrage et après avoir atteint un point de fonctionnement stable, afin de lancer l'opération de transport et l'augmentation de la pression du mélange multiphasique.

2. Procédé selon la revendication 1, **caractérisé en ce que** la phase solide est évacuée de façon continue par l'intermédiaire d'une écluse à roue cellulaire ou d'un séparateur cyclone, ou de façon discontinue par l'intermédiaire d'une vanne, de coups de liquide ou d'une trappe d'inspection.

3. Procédé selon l'une des revendications précédentes, **caractérisé en ce que** la phase liquide séparée de la phase solide est amenée de manière régulée au côté aspiration.

4. Procédé selon l'une des revendications précédentes, **caractérisé en ce que** la phase liquide séparée de la phase solide est filtrée avant d'être amenée au côté aspiration.

5. Procédé selon l'une des revendications précédentes, **caractérisé en ce que**, pour évacuer la phase solide séparée, une phase liquide est amenée par intermittence à la pompe multiphase et est introduite dans la chambre de séparation (45).

6. Procédé selon la revendication 5, **caractérisé en ce que** la phase liquide est collectée puis introduite par intermittence dans la chambre de séparation (45).

7. Procédé selon l'une des revendications précédentes, **caractérisé en ce que** la phase solide est évacuée hors de la chambre de séparation (45) de manière commandée par capteur ou à tour de rôle.

8. Procédé selon l'une des revendications précédentes, **caractérisé en ce que** la phase liquide est amenée au côté aspiration par une conduite de recirculation (50) dans laquelle est disposée une vanne (55) qui est entièrement ouverte lors du démarrage.

9. Procédé selon l'une des revendications précédentes, **caractérisé en ce que** la phase liquide est amenée au côté aspiration par une conduite de recirculation (50) dans laquelle est disposée une vanne (55) dont la section transversale de passage est réglée en fonction des paramètres de fonctionnement.
